# FASCICULE DE BREVET EUROPEEN

(11) **EP 1 308 014 B1**
(45) Date de publication et mention de la délivrance du brevet: **05.04.2006**
(21) Numéro de dépôt: 01958201.4
(22) Date de dépôt: 27.07.2001
(51) Int. Cl.: H04L 29/06

(54) **TRADUCTION D'IDENTIFICATEURS DANS UN RESEAU DE PAQUETS**
ADRESSENÜBERSETZUNGSSYSTEM FÜR EINE PAKETNETZWERK
TRANSLATION OF USER INSTALLATION TERMINAL IDENTIFIERS IN A PACKET NETWORK

(30) Priorité: 08.08.2000 FR 0010493
(43) Date de publication de la demande: 07.05.2003
(73) Titulaire: FRANCE TELECOM, 75015 Paris (FR)
(72) Inventeur: CHARLOT, Philippe, F-22300 Lannion (FR)
(74) Mandataire: Cabinet Martinet & Lapoux
(86) Numéro de dépôt international: PCT/FR2001/002487
(87) Numéro de publication internationale: WO 2002/013477

(56) Documents cités:
- EP-A- 0 840 482
- US-A- 6 061 349
- YEOM H Y ET AL: "IP MULTIPLEXING BY TRANSPARENT PORT-ADDRESS TRANSLATOR" PROCEEDINGS OF THE SYSTEMS ADMINISTRATION CONFERENCE. LISA, XX, XX, 29 septembre 1996 (1996-09-29), pages 113-121, XP002046289

## Description

La présente invention concerne le traitement d'identificateurs, dits également adresses, de terminaux téléphoniques d'installation d'usager pour des communications téléphoniques à travers un réseau de transmission par paquets. L'invention concerne plus précisément la transmission de la voix à travers un réseau de transmission par paquets à haut débit, tel que le réseau internet.

Dans les systèmes de téléphonie basés sur des réseaux de transmission par paquets, tels que le réseau internet, il est nécessaire d'identifier de manière biunivoque les différents terminaux desservis par le réseau pour qu'ils puissent émettre et recevoir des paquets de communication téléphonique. Au niveau mondial, un identificateur unique, tel qu'une adresse IP (internet Protocol), est associé à chaque terminal. L'adresse IP, lorsqu'elle est incluse en tant qu'adresse de destination dans un paquet, sert au routage de ce paquet à travers le réseau.

L'adresse IPv4 selon la version 4 du protocole internet contient 32 bits, soit 4 octets, ce qui ne représente qu'environ 4 milliards d'identificateurs potentiels de terminal. Comme beaucoup d'adresses sont déjà utilisées par des micro-ordinateurs pour se connecter au réseau internet, l'adresse IPv4 en tant qu'identificateur de terminal limite la capacité d'adressage dans le réseau internet. Par conséquent cette capacité d'adressage restreint l'extension de l'accès au réseau internet à tous les terminaux de type téléphonique auxquels devraient être offerts des services de téléphonie basés sur des réseaux de transmission par paquet de type internet.

Pour remédier à la capacité d'adressage dans le réseau internet, un nouveau protocole selon une version 6 est prévu pour étendre des adresses de terminal IPv6 à 128 bits. Les 128 bits de l'adresse IPv6 permettent de définir un très grand nombre d'identificateurs de terminal, soit environ 3.10³⁸ identificateurs potentiels. Bien qu'il soit prévu d'encapsuler des adresses IPv4 dans des adresses IPv6 afin de faciliter la transition entre la version 4 et la version 6 du protocole internet, il n'existe actuellement aucun terminal de téléphonie sur le réseau internet désigné par une adresse IPv6.

On notera que l'invention ne concerne pas une conversion d'adresses entre des réseaux selon le protocole IPv4 et le protocole IPv6, comme décrite dans la demande de brevet EP 0 840 482.

Dans les réseaux de télécommunication basés sur de la commutation de circuit, des terminaux raccordés directement à un réseau d'accès sont identifiés par le numéro de leur accès, tel qu'une ligne de télécommunication. Lorsque des terminaux sont raccordés à un réseau d'accès à travers une installation de client, chaque terminal possède un identificateur privé seulement utilisé en local dans l'installation, et seule l'installation de client est désignée par un unique numéro correspondant à l'accès de l'installation au réseau d'accès.

Si les terminaux d'une installation de client doivent être identifiés individuellement depuis l'extérieur de l'installation, alors il est nécessaire d'attribuer à chacun des terminaux de l'installation un identificateur. Par exemple, lorsqu'une installation téléphonique numérique de client est raccordée à un réseau numérique à intégration de service, l'opérateur du réseau peut attribuer des numéros téléphoniques respectivement aux terminaux de l'installation de client qui devient alors transparente à l'adressage des terminaux.

Dans les réseaux de télécommunication basés sur la commutation de paquets, tels que le réseau internet par exemple, chaque terminal doit être identifié de manière bijective et donc de manière non ambiguë afin de dialoguer avec d'autres terminaux ou serveurs d'application à travers le réseau de transmission par paquets. Chaque terminal doit donc posséder son propre identificateur qui le distingue des autres terminaux. L'identificateur du terminal est unique au niveau mondial pour assurer une cohérence avec le réseau existant.

Pour les services de téléphonie basés sur des réseaux de transmission par paquets, c'est-à-dire pour des réseaux acheminant de la voix au moyen de paquets, cette identification bijective est particulièrement importante. En effet, un terminal devant pouvoir être appelé en permanence, son identificateur doit être connu et valide par le réseau de paquets.

Par ailleurs, il existe des installations de télécommunication de client dans lesquelles les terminaux sont reliés par un réseau Intranet basé sur le protocole internet et par conséquent possédant des adresses privées au format IP respectivement allouées en interne aux terminaux. Pour éviter des ambiguïtés d'adressage, par exemple lorsque l'installation de client doit être connectée au réseau internet, un dispositif de traduction est inclus au niveau de l'accès à l'installation de manière à traduire chaque adresse de terminal privée IP en une adresse de terminal publique permettant l'adressage de chaque terminal de l'installation depuis l'extérieur de l'installation.

La présente invention a pour objectif d'accroître la capacité d'adressage de terminaux dans un réseau de transmission par paquets sans modifier le format des identificateurs de terminaux inclus dans les paquets transitant à travers le réseau, dans le cadre de la transmission de voix à travers le réseau de paquets. En d'autres termes, l'invention vise à fournir, de manière transparente vis-à-vis du réseau de paquets, un identificateur unique à chaque terminal particulièrement téléphonique dans une installation de télécommunication de client sans modifier l'identificateur de l'installation, tel que l'adresse IPv4 de l'installation connue publiquement par le réseau, tout en permettant une transmission de la voix depuis le terminal.

A cette fin, un procédé pour traduire des identificateurs de terminaux dans une installation de télécommunication de client, lesdits identificateurs ayant un format prédéterminé et étant inclus dans des paquets de réseau transitant à travers un réseau de transmission par paquets, est caractérisé en ce que
l'identificateur d'un terminal inclus en tant qu'adresse de source dans un premier paquet de réseau transmis depuis le terminal à travers l'installation est traduit en un identificateur prédéterminé de l'installation ayant ledit format et inclus dans un deuxième paquet de réseau qui est transmis dans le réseau de paquets vers un moyen de fournisseur de services de téléphonie, et
un numéro de port désignant une étape de communication de voix avec le terminal et inclus dans un paquet de transport encapsulé dans le premier paquet de réseau est traduit en un numéro de port alloué dynamiquement au terminal et inclus dans un paquet de transport encapsulé dans le deuxième paquet de réseau afin d'identifier à la fois ledit terminal et l'étape de communication avec le terminal dans le moyen de fournisseur,
et inversement, l'identificateur de l'installation inclus en tant qu'adresse de destination dans un troisième paquet de réseau qui est transmis dans le réseau de paquets depuis le moyen de fournisseur vers l'installation à travers le réseau de paquets et le numéro de port inclus dans un paquet de transport encapsulé dans le troisième paquet de réseau sont traduits respectivement en l'identificateur du terminal inclus dans un quatrième paquet de réseau transmis vers le terminal à travers l'installation et le numéro de port désignant l'étape de communication de voix et inclus dans un paquet de transport encapsulé dans le quatrième paquet de réseau.

La traduction d'identificateurs entre le réseau de transmission par paquets et l'installation de télécommunication de client est effectuée en temps réel pour tous les paquets émis et reçus par chaque terminal de l'installation pendant toute la durée de chaque communication de voix avec le terminal. La traduction est transparente vis-à-vis de l'installation de client et du réseau de transmission par paquet, c'est-à-dire le format des paquets émis ou reçus par chaque terminal de l'installation, et les paquets émis ou reçus par le moyen de fournisseur de services de téléphonie relié au réseau de transmission par paquets n'est pas modifié, ce qui n'engendre aucune dégradation de qualité de service pour le client. En particulier, aucun retard dû au traitement de la traduction des identificateurs n'est perceptible dans la transmission des paquets.

Avantageusement, bien qu'un client ne possède qu'un seul identificateur d'installation, tel qu'une adresse IP, et par conséquent bien que l'ensemble des terminaux de l'installation ne peut être relié que par un accès, tel qu'un accès physique de client type ligne téléphonique, ligne louée ou ligne de transmission de données, chacun des terminaux de l'installation est adressable par un identificateur respectif depuis l'extérieur de l'installation, comme si le client possédait autant d'accès "physiques" au réseau que de terminaux.

Initialement, lors du raccordement du terminal dans l'installation, le numéro de port dans le deuxième paquet de réseau est un numéro de port de source prédéterminé indépendant du terminal, et le moyen de fournisseur de services attribue un numéro de port respectif au terminal et le transmet en tant que numéro de port de destination dans le paquet de transport inclus dans le troisième paquet de réseau vers l'installation.
Au cours d'une communication avec un terminal, après identification de celui-ci par transmission du numéro de port respectif depuis l'installation au moyen de fournisseur de services de téléphonie pour un appel sortant, ou depuis le moyen de fournisseur de services vers l'installation pour un appel entrant, le numéro de port associé au terminal et inclus dans un paquet de transport encapsulé dans un paquet de réseau transmis dans le réseau est alloué de manière dynamique pour des étapes de communication de voix entre le terminal et un terminal distant sous le contrôle du moyen de fournisseur de services. Ceci permet aux terminaux de suivre en temps réel une communication téléphonique via le réseau de paquets, sans aucune dégradation de la qualité de service pour les clients devant les terminaux.

Le numéro de port alloué dynamiquement est à la fin de la communication avec le terminal, de nouveau disponible pour une communication avec un autre terminal de l'installation.

Afin d'améliorer la récupération de voix dans le terminal ou le serveur de fournisseur, l'identificateur du terminal et le numéro de port désignant une étape de communication de voix sont également inclus dans un champ de données du premier paquet de réseau et sont traduits respectivement en l'identificateur de l'installation et le numéro de port alloué dynamiquement au terminal qui sont également inclus dans un champ de données du deuxième paquet de réseau, et inversement, l'identificateur de l'installation et le numéro de port alloué dynamiquement au terminal sont également inclus dans un champ de données du troisième paquet de réseau et sont traduits respectivement en l'identificateur du terminal et le numéro de port désignant une étape de communication de voix qui sont également inclus dans un champ de données du quatrième paquet de réseau.

L'invention concerne également un dispositif de traduction d'identificateurs mettant en oeuvre le procédé de traduction selon l'invention. Le dispositif est caractérisé en ce qu'il comprend
une table de correspondance pour faire correspondre l'identificateur d'un terminal contenu dans un paquet de réseau transmis dans l'installation à un numéro de port allouée dynamiquement et inclus dans un paquet de transport encapsulé dans un paquet de réseau transmis dans le réseau de paquets,
un moyen de commande pour remplacer l'identificateur du terminal inclus en tant qu'adresse de source dans un premier paquet de réseau transmis depuis le terminal à travers l'installation par un identificateur prédéterminé de l'installation ayant ledit format et inclus dans un deuxième paquet de réseau qui est transmis dans le réseau de paquets vers un moyen de fournisseur de services de téléphonie, et pour remplacer un numéro de port désignant une étape de communication de voix avec le terminal et inclus dans un paquet de transport encapsulé dans le premier paquet de réseau par un numéro de port alloué dynamiquement au terminal et inclus dans un paquet de transport encapsulé dans le deuxième paquet de réseau afin d'identifier à la fois ledit terminal et l'étape de communication avec le terminal dans le moyen de fournisseur, et
un moyen de commande pour remplacer l'identificateur de l'installation inclus en tant qu'adresse de destination dans un troisième paquet de réseau qui est transmis dans le réseau de paquets depuis le moyen de fournisseur vers l'installation à travers le réseau de paquets et le numéro de port inclus dans un paquet de transport encapsulé dans le troisième paquet de réseau respectivement par l'identificateur du terminal inclus dans un quatrième paquet de réseau transmis vers le terminal à travers l'installation et le numéro de port désignant l'étape de communication de voix et inclus dans un paquet de transport encapsulé dans le quatrième paquet de réseau.

Le dispositif de traduction d'identificateur selon l'invention sert de "pont" entre les terminaux de télécommunication de client et un réseau d'accès cette installation. Ce pont est complètement transparent vis-à-vis du traitement des paquets transitant à travers celui-ci entre l'installation du client et le réseau de transmission par paquets.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique de plusieurs installations de télécommunication de client desservies par un réseau de transmission par paquets auquel est relié un serveur de fournisseur de services de téléphonie ;
- la figure 2 est un bloc-diagramme schématique d'un dispositif de traduction d'identificateurs selon l'invention interconnecté entre une installation de client et un réseau d'accès ;
- la figure 3 est un diagramme de transmission de paquets entre deux terminaux d'installation de client et le serveur de fournisseur de services à travers le dispositif de traduction selon l'invention;
- la figure 4 montre schématiquement le format des en-têtes de paquets de liaison, réseau et transport transitant à travers le dispositif de traduction ; et
- la figure 5 est un algorithme du procédé de traduction d'identificateurs selon l'invention lors de l'enregistrement d'un terminal et lors de l'établissement d'une communication avec le terminal.

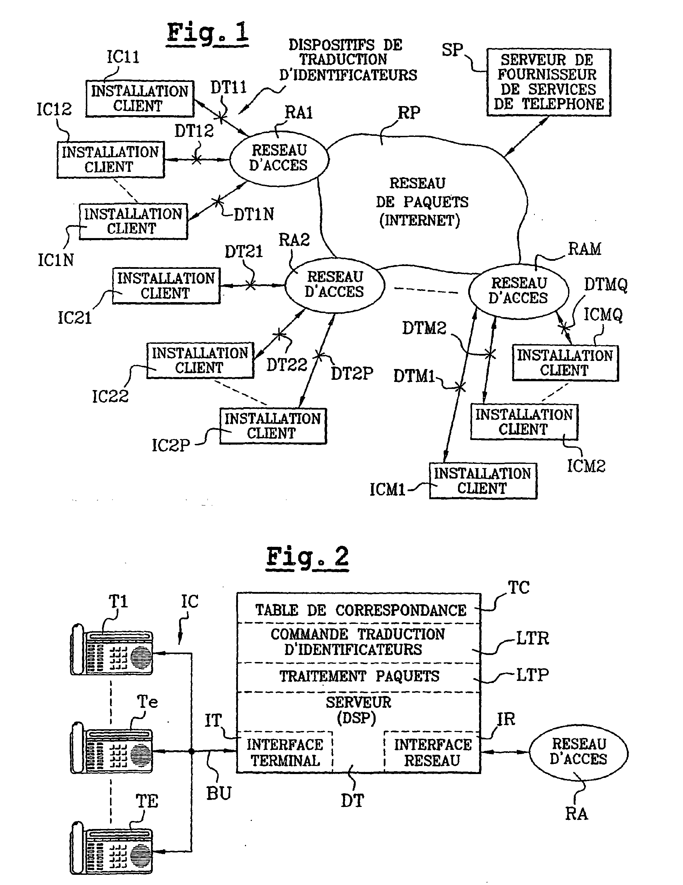

Comme montré schématiquement à la figure 1, l'invention sera décrite ci-après dans le cadre de relations entre un serveur de fournisseur de services de téléphonie SP (Service Provider) et des installations de télécommunication de client à travers un réseau de transmission par paquets à haut débit RP du type réseau internet auquel on se référera dans la suite. A titre d'exemple, la figure 1 montre M réseaux d'accès RA1, RA2, ..., RAM pour donner respectivement à des installations de télécommunication de client IC11 à IC1N, IC21 à IC2P, ..., ICM1 à ICMQ, l'accès au réseau de paquets RP, M, N, P et Q étant des entiers quelconques. L'un au moins des réseaux d'accès RA1 à RAM est par exemple un réseau de lignes ADSL (Asymmetric Digital Subscriber Line), ou un réseau câblé, ou un réseau de radiotéléphonie, ou bien simplement un réseau téléphonique commuté RTC. Le serveur de fournisseur de services SP joue le rôle de passerelle entre des terminaux desservis par divers réseaux d'accès de manière à offrir aux terminaux des installations de client des communications téléphoniques à travers le réseau internet RP et ainsi à faire supporter de la voix par des paquets transitant dans le réseau internet RP. Les réseaux d'accès relient les installations de client au réseau internet RP soit à travers des connexions permanentes, soit à travers des connexions à la demande.

Une installation de télécommunication de client comprend par exemple quelques terminaux T1 à TE connectés directement à une ligne de client téléphonique, louée ou de transmission de données, ou bien desservis par un canal téléphonique ou radiotéléphonique commun, ou bien encore disposés en réseau à travers un serveur par exemple du type plate-forme de commutation privée de type PABX. Chaque terminal Te, e étant un indice compris entre 1 et l'entier E, peut être un terminal classique de téléphonie, ou un terminal numérique de type modem associé à un micro-ordinateur ou à un télécopieur par exemple, ou bien encore un terminal téléphonique portable DECT desservi par une base fixe.

Comme il est connu, chaque installation de télécommunication de client IC est désignée au niveau du réseau de paquets RP, et particulièrement du réseau internet, par un identificateur respectif unique IPI, qui est constitué d'une manière générale d'un numéro ou d'une chaîne de caractères identifiant de manière non ambiguë l'installation. Pour le réseau internet constituant le réseau de paquets RP, l'identificateur est une adresse IPv4 constituée de quatre octets selon la version 4 du protocole internet. Selon la technique antérieure, si le serveur de fournisseur de services de téléphonie SP souhaite communiquer directement avec l'un des terminaux dans une installation de client, soit cette communication est impossible du fait que l'identificateur privé du terminal interne à l'installation est inaccessible de l'extérieur de l'installation, soit une autre adresse IP mais publique doit être attribuée au terminal afin que le serveur SP communique avec celui-ci.

Pour remédier à ces inconvénients, des dispositifs de traduction d'identificateurs de terminaux DT11 à DT1N, DT21 à DT2P, ..., DTM1 à DTMQ sont respectivement interconnectés en coupure entre les installations IC11 à IC1N, IC21 à IC2P, ..., ICM1 à ICMQ et les réseaux d'accès RA1, RA2, ..., RAM. Vis-à-vis du format des paquets et plus particulièrement des adresses de source et de destination dans les paquets, les dispositifs de traduction d'identificateurs sont transparents. Ainsi le réseau de paquets RP considère chaque dispositif de traduction d'identificateurs comme une installation de client sans dispositif de traduction, comme selon la technique antérieure, et réciproquement, chaque installation de télécommunication de client considère le réseau de paquets comme si elle était raccordée à celui-ci selon la technique antérieure.

A titre d'exemple, la figure 2 illustre une installation de télécommunication de client, désignée par IC dans la suite de la description, comprenant des terminaux téléphoniques T1, ... , Te, ..., TE raccordés par un bus commun BU au réseau d'accès respectif RA à travers un dispositif de traduction d'identificateurs respectif DT selon l'invention.

Le dispositif de traduction d'identificateurs DT est, selon cette réalisation préférée, hébergé dans un serveur informatique disposant de deux interfaces IT et IR. L'interface IT relie le dispositif de traduction DT aux terminaux téléphoniques T1 à TE de l'installation de client IC à travers le bus BU. L'interface IR relie le dispositif de traduction DT au réseau d'accès respectif RA. Par exemple, les interfaces IT et IR sont de type Ethernet.

Par exemple, le dispositif de traduction DT est implémenté dans un circuit intégré spécifique pour traitement de signal de type processeur DSP (Digital Signal Processor) comportant essentiellement deux couches logicielles LTP et LTR.

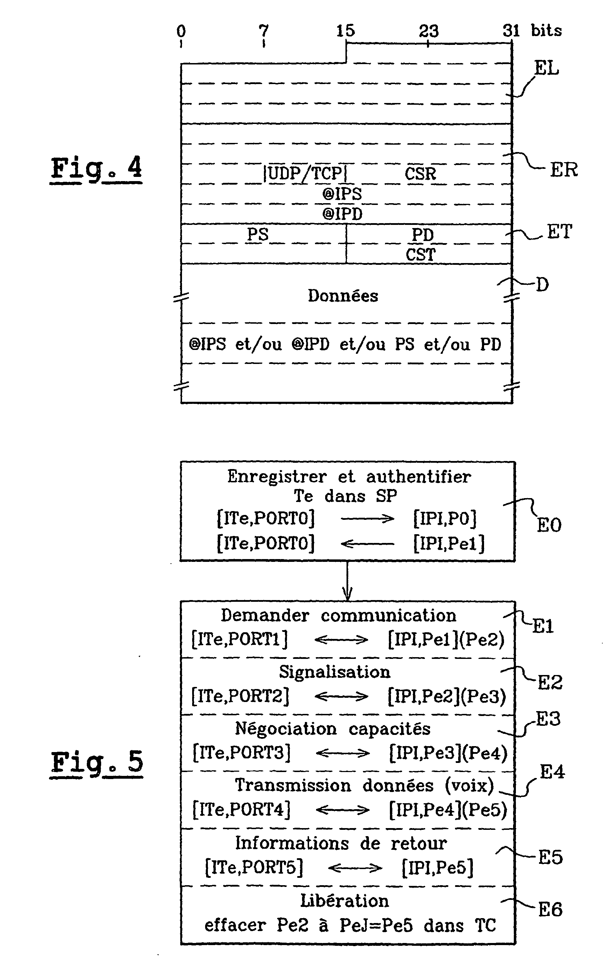

La première couche logicielle LTP traite tous les paquets aussi bien dans le sens émission d'un terminal vers le réseau d'accès RA que dans le sens réception depuis le réseau d'accès RA vers le terminal, pour un appel entrant ou un appel sortant. La couche LTP décode en particulier les données contenues dans les paquets, relatives aux événements d'une communication protocolaire entre un terminal et le serveur de fournisseur de services de téléphonie SP. Ces événements sont par exemple la détection d'un appel entrant ou sortant, la récupération de l'identificateur du demandeur de la communication ou du demandé de la communication qui peut être l'un des terminaux T1 à TE de l'installation ou bien un terminal téléphonique éloigné. La couche logicielle LTP recalcule également un champ de vérification CSR, CST (checksum) calculé sur les mots de 16 bits de l'en-tête ER, ET d'un paquet de réseau ou d'un paquet de transport (figure 4) puisque cet en-tête est modifié par la traduction comme on le verra dans la suite.

La deuxième couche logicielle LTR commande la traduction proprement dite en temps réel des identificateurs contenus dans les paquets traversant le dispositif de traduction DT, c'est-à-dire émis et reçus par les interfaces IT et IR. La couche logicielle LTR est associée à une table de correspondance TC entre des identificateurs IT1 à ITE alloués en interne aux terminaux T1 à TE de l'installation de client IC et des numéros de ports accessibles par le serveur de fournisseur de services SP depuis l'extérieur de l'installation. La couche logicielle LTR charge et maintient à jour automatiquement des listes de ports P11-P1J à PE1-PEJ attribués à l'enregistrement des terminaux et dynamiquement aux terminaux T1 à TE dans la table de correspondance TC, J étant un entier typiquement égal à 5.

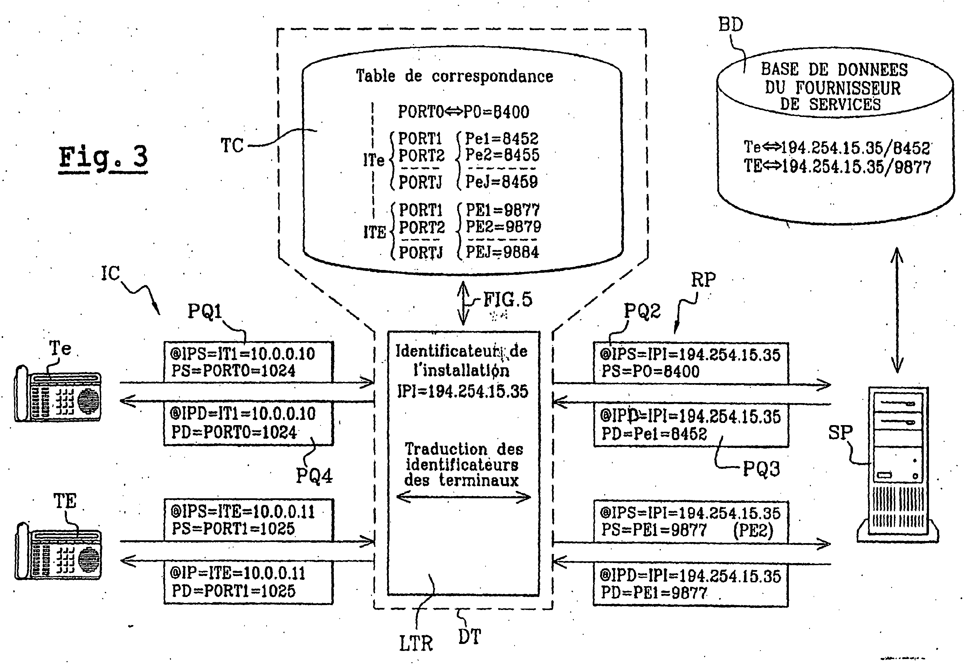

On échange de paquets entre l'un des terminaux de l'installation de télécommunication de client IC, telle que le terminal Te, et le serveur de fournisseur de services de téléphonie SP à travers le dispositif de traduction d'identificateurs respectif DT est illustré à la figure 3. Dans cette figure, le dispositif de traduction DT est schématisé par la couche logicielle de traduction LTR et la table de correspondance TC qui interviennent essentiellement dans la traduction des identificateurs de paquet.

L'identificateur ITe du terminal Te inaccessible de l'extérieur de l'installation IC et l'identificateur IPI de l'installation IC accessible de l'extérieur de l'installation sont supposés être des adresses IPv4 telles que "10.0.0.10" et "194.254.15.35". Comme déjà dit, la technique de communication au niveau de la couche liaison repose sur des paquets Ethernet, et la couche réseau repose sur les normes et protocoles du réseau internet. Plus précisément, l'agencement des différentes couches pour l'échange de paquets entre le terminal Te et le serveur SP repose sur des normes selon le protocole H323 dont la couche de transport s'appuie soit sur le protocole de transport UDP (User Datagram Protocol) pour transmettre notamment des paquets IP relatifs à de la voix pendant une communication téléphonique, soit sur le protocole de transport TCP (Transport Control Protocol) pour transmettre des paquets IP relatifs à de la signalisation particulièrement au début et à la fin d'une communication téléphonique, puisque le protocole TCP est plus fiable que le protocole UDP et préserve à la réception l'ordre des paquets émis, ainsi que la retransmission des paquets perdus.

Il est rappelé que les routeurs dans le réseau de paquets RP utilise les trois premières couches basses du modèle ISO et n'analyse généralement que l'en-tête des paquets de la couche réseau 3 pour acheminer les paquets vers leur destination. Ainsi, l'adresse IPI de l'installation IC est utilisée en tant qu'adresse de source pour acheminer un paquet de réseau depuis le dispositif de traduction DT vers le serveur SP, ou en tant qu'adresse de destination pour acheminer un paquet de réseau depuis le serveur SP vers l'installation IC.

Comme montré à la figure 4, un paquet de protocole de réseau, dit paquet de réseau, ayant un en-tête. ER est encapsulé dans un paquet de protocole de liaison, dit paquet de liaison, ayant un en-tête EL en l'occurrence selon le protocole Ethernet, et encapsule un paquet de protocole de transport, dit paquet de transport, ayant un en-tête ET. Dans l'en-tête ER du paquet de réseau, un octet de protocole indique le protocole UDP ou TCP utilisé par le paquet de transport avec l'en-tête ET, quatre octets désignent l'adresse de source @IPS et quatre octets désignent l'adresse de destination @IPD.

Conformément à l'invention; l'adresse ITe du terminal Te en tant qu'adresse de source ou adresse de destination dans un paquet transitant dans l'installation IC entre le terminal Te et le dispositif de traduction DT correspond à un numéro de port de source PS à deux octets ou à un numéro de port de destination PD à deux octets dans l'en-tête ET d'un paquet de transport transitant entre le dispositif de transport DT et le serveur de fournisseur de services SP.

En outre, selon le protocole H323, le champ de données D dans un paquet de transport peut encapsuler, au niveau de la couche application, de manière redondante avec les en-têtes ER et ET, tout ou partie de l'ensemble des paramètres @IPS, @IPD, PS et PD en fonction de la nature du paquet afin que les extrémités, le terminal Te et le serveur SP en communication, puissent modifier et/ou utiliser ces paramètres. La couche logicielle de traduction LTR se charge ainsi non seulement de la traduction de ces paramètres dans les en-têtes ER et ET, mais également dans le champ de données D lorsque ces paramètres sont présents.

Dans la suite de la description, la traduction de l'un de ces paramètres implique obligatoirement la traduction de ce paramètre dans l'en-tête correspondant et de celui dans le champ de données lorsqu'il existe.

Initialement, à une étape E0 du procédé de traduction d'identificateurs selon l'invention, le terminal Te se déclare auprès du serveur du fournisseur de services de téléphonie SP lors du raccordement du terminal Te au bus BU, c'est-à-dire lors de la première connexion du terminal Te au serveur SP. Le terminal Te transmet un premier paquet de réseau PQ1 dont l'adresse de source @IPS est égale à l'identificateur ITe du terminal et dont le numéro de port de source PS dans le paquet de transport ET est un numéro de port prédéterminé, par exemple égal à 1024, indiquant une phase d'enregistrement et d'authentification de tout terminal auprès du serveur SP, et dont l'adresse de destination est celle du serveur SP. Ce numéro de port PORTO ainsi que les autres numéros de port attribués dynamiquement aux terminaux selon l'invention sont choisis parmi les numéros non attribués, c'est-à-dire différents de 0 à 1023, selon le protocole UDP ou TCP. Le dispositif de traduction d'identificateurs DT convertit ensuite l'adresse de terminal privée ITe en l'adresse publique IPI de l'installation, et convertit le numéro de port PORTO en un numéro de port de source prédéterminé PO indépendant du terminal et qui a été attribué à tout enregistrement de terminal par le fournisseur de services pour signaler une demande d'enregistrement du terminal. Ainsi le paquet PQ1 est traduit en un paquet PQ2 dont l'adresse de source @IPS est l'adresse d'installation IPI et dont le numéro de port de source PS est le numéro de port prédéterminé P0, par exemple égal à 8400, qui désigne un numéro de port prédéterminé de la couche transport dans le serveur SP.

A réception du paquet PQ2, celui-ci est adressé au port PO dans le serveur SP. Le serveur SP attribue un numéro de port respectif Pe1 disponible dans une base de données BD, au terminal Te qui le désigne explicitement dans l'installation IC. Le serveur SP mémorise le couple [IPI, Pe1] qui sera utilisé par le fournisseur de services pour identifier le terminal Te au début de chaque communication avec le terminal Te.

Le serveur de fournisseur de services SP acquitte l'enregistrement et l'authentification du terminal Te en retransmettant un paquet PQ3 à destination de l'installation IC désignée par l'adresse IPI. Le paquet PQ3 contient l'adresse IPI en tant qu'adresse de destination @IPD, et le numéro de port de terminal Pel, par exemple 8452, en tant que numéro de port de destination PD.

Le dispositif de traduction DT procède alors à une conversion d'identificateurs réciproque de la précédente, en faisant correspondre au couple [IPI, P11], le couple [ITe, PORT0] grâce à la table de correspondance TC afin de transmettre dans le bus BU au terminal Te un paquet PQ4 contenant l'adresse ITe et un numéro de port prédéterminé PORT0 pour valider l'enregistrement, en tant qu'adresse de destination et numéro de port de destination.

Ainsi les différents terminaux T1 à TE de l'installation IPC sont différenciés vis-à-vis de l'extérieur de l'installation par des numéros de port P11 à P1E dans les paquets de transport ET qui peuvent être considérés comme des sous-adresses des adresses IT1 à ITE des terminaux dans l'installation.

Comme montré à la figure 5, le procédé de traduction comprend schématiquement J+1 étapes E1 à E(J+1) au cours d'une communication entre le terminal Te et un terminal distant à travers le serveur SP. Lors de l'établissement d'une communication, soit pour un appel entrant, soit pour un appel sortant, l'étape E1 déclare une demande de communication et d'authentification par un échange de paquets analogue aux échanges de paquets PQ1 à PQ4 décrits précédemment afin que le dispositif de traduction DT marque cette demande de communication par la correspondance entre l'adresse ITe et le numéro de port Pe1 et plus précisément entre le couple [ITe, PORT1] et le couple [IPI, Pe1]. Pour un appel entrant, le serveur SP transmet un paquet avec le couple [IPI, Pe1] en tant qu'adresse de destination @IPD et numéro de port de destination PD ; pour un appel sortant, le terminal Te transmet un paquet avec le couple [ITe, PORT1) en tant qu'adresse de source @IPS et numéro de port de source PS.

Dans la figure 3, l'étape E1 est illustrée en relation avec le terminal TE.

Puis aux étapes suivantes E2 à EJ, la couche LTR dans le dispositif de traduction alloue dynamiquement et successivement différents numéros de port Pe2 à PeJ au terminal Te qui sont encore disponibles et qui correspondent à des numéros de port prédéterminés PORT2 à PORTJ relatifs à des applications, c'est-à-dire à des étapes de la communication en cours. Par exemple, l'allocation dynamique des numéros de port par la couche de commande de traduction LTR peut être analogue à l'allocation dynamique des adresses IP selon le protocole DHCP (Dynamic Host Configuration Protocol).

Le port PORT2 lorsqu'il est reçu avec l'adresse ITe correspond au numéro de port Pe2 indiquant une signalisation lors de l'établissement de la communication à l'étape E2. En pratique, les ports PORT2 et Pe2 ont chacun deux valeurs, une première valeur pour désigner une signalisation pour appel entrant et une deuxième valeur pour désigner une signalisation pour appel sortant selon le protocole Q.931/H225.0. La signalisation concerne par exemple un appel précédent en cours, des terminaux connectés, une mise en garde d'un terminal, etc. Le numéro de port PORT3, lorsqu'il est transmis dans un paquet avec l'identificateur de terminal ITe à l'étape E3, correspond dynamiquement au numéro de port Pe3 pour négocier des capacités de terminaux en vue de transmettre des-données audio et/ou vidéo par exemple selon le protocole H245. Le numéro de port PORT4 lorsqu'il est transmis dans un paquet avec l'identificateur ITe correspond dynamiquement au numéro de port Pe4 pour indiquer un flux de données de type voix à l'étape E4 selon le protocole de transport RTP (Real Time Protocol). Le numéro de port PORTJ = PORT5 lorsqu'il est transmis dans un paquet avec l'identificateur ITe à l'étape EJ = E5 correspond dynamiquement au numéro de port PeJ = Pe5 pour indiquer des informations de retour selon le protocole de transport RTCP (Real Time Control Protocol). Une information de retour est par exemple une perte de paquets, en acquittement de paquets de voix transmis et non reçus suivant l'autre sens de transmission à une étape précédente E4. Des couples d'étapes E4 et E5 peuvent se succéder au cours d'une communication tant que des données sont à transmettre.

Ainsi, à un instant donné, par exemple lorsque trois terminaux Tl, Te et TE sont en communication, la table de correspondance TC fait correspondre chacun des ensembles d'étapes de communication [P11 à P1J], [Pe1 à PeJ] et [PE1 à PEJ] à l'ensemble des numéros de ports prédéterminés [PORT1 à PORTJ] dans chaque terminal.

Les numéros de port Pe2 à PeJ sont alloués successivement au terminal Te en fonction dé leur dzsponibilité dans la table de correspondance TC. Chaque numéro de port Pej avec 2 ≤ j ≤ J est inclus dans le champ de données du paquet au cours de l'étape précédente E(j-1) afin que le serveur SP suive la chaîne des étapes de communication.

Enfin, la liste de ports Pe2 à PeJ alloués dynamiquement est effacée de la table de correspondance TC par la couche de commande LTR, à la libération, c'est-à-dire à la fin de la communication avec le terminal Te, à l'étape E6 de manière à mettre les ports Pe2 à PeJ à disposition pour des communications avec d'autres terminaux de l'installation.

## Revendications

1. Procédé pour traduire des identificateurs de terminaux (T1-TE) dans une installation de télécommunication de client (IC), lesdits identificateurs ayant un format prédéterminé et étant inclus dans des paquets de réseau (ER) transitant à travers un réseau de paquets (RP), **caractérisé en ce que**
l'identificateur (ITe) d'un terminal (Te) inclus en tant qu'adresse de source (@IPS) dans un premier paquet de réseau (PQ1) transmis depuis le terminal à travers l'installation (IC) est traduit (E0-E4) en un identificateur prédéterminé (IPI) de l'installation ayant ledit format et inclus dans un deuxième paquet de réseau (PQ2) qui est transmis dans le réseau de paquets (RP) vers un moyen de fournisseur de services de téléphonie (SP), et
un numéro de port (PORT1-PORTJ) désignant une étape de communication de voix (E2-EJ) avec le terminal (Te) et inclus dans un paquet de transport (ET) encapsulé dans le premier paquet de réseau (PQ1) est traduit en un numéro de port (Pe1-PeJ) alloué dynamiquement au terminal (Te) et inclus dans un paquet de transport (ET) encapsulé dans le deuxième paquet de réseau (PQ2) afin d'identifier à la fois ledit terminal et l'étape de communication avec le terminal dans le moyen de fournisseur (SP),
et inversement, l'identificateur (IPI) de l'installation (IC) inclus en tant qu'adresse de destination (@IPD) dans un troisième paquet de réseau (PQ3) qui est transmis dans le réseau de paquets (RP) depuis le moyen de fournisseur (SP) vers l'installation (IC) à travers le réseau de paquets (RP) et le numéro de port (Pe1-PeJ) inclus dans un paquet de transport encapsulé dans le troisième paquet de réseau (PQ3) sont traduits respectivement en l'identificateur (ITe) du terminal inclus dans un quatrième paquet de réseau (PQ4) transmis vers le terminal (Te) à travers l'installation (IC) et le numéro de port (PORT1-PORTJ) désignant l'étape de communication de voix (E2-EJ) et inclus dans un paquet de transport encapsulé dans le quatrième paquet de réseau (PQ4).

2. Procédé conforme à la revendication 1, selon lequel, lors du raccordement du terminal (ITe) dans l'installation (IC), le numéro de port dans le deuxième paquet de réseau (PQ2) est un numéro de port de source prédéterminé (P0) indépendant du terminal, et le moyen de fournisseur (SP) attribue un numéro de port respectif (Pe1) au terminal (Te) et le transmet en tant que numéro de port de destination dans le paquet de transport inclus dans le troisième paquet de réseau (PQ3) vers l'installation (IC) .

3. Procédé conforme à la revendication 1 ou 2, selon lequel le numéro de port (Pe2-peJ) alloué dynamiquement est de nouveau disponible en fin de communication avec le terminal (ITe).

4. Procédé conforme à l'une quelconque des revendications 1 à 3, selon lequel l'identificateur (ITe) du terminal (Te) et le numéro de port (PORT1-PORTJ) désignant une étape de communication de voix (E2-EJ) sont également inclus dans un champ de données (D) du premier paquet de réseau (PQ1) et sont traduits respectivement en l'identificateur (IPI) de l'installation et le numéro de port (Pe1-PeJ) alloué dynamiquement au terminal (Te) qui sont également inclus dans un champ de données (D) du deuxième paquet de réseau (PQ2), et inversement, l'identificateur (IPI) de l'installation et le numéro de port (Pe1-PeJ) alloué dynamiquement au terminal (Te) sont également inclus dans un champ de données (D) du troisième paquet de réseau (PQ3) et sont traduits respectivement en l'identificateur (ITe) du terminal (Te) et le numéro de port (PORT1-PORTJ) désignant une étape de communication de voix (E2-EJ) qui sont également inclus dans un champ de données (D) du quatrième paquet de réseau (PQ4).

5. Dispositif pour traduire des identificateurs de terminaux (T1-TE) dans une installation de télécommunication de client (IC), lesdits identificateurs ayant un format prédéterminé et étant inclus dans des paquets de réseau (ER) transitant à travers un réseau de transmission par paquets (RP), **caractérisé en ce qu'**il comprend
une table de correspondance (TC) pour faire correspondre l'identificateur (ITe) d'un terminal (Te) contenu dans un paquet de réseau (ER) transmis dans l'installation (IC) à un numéro de port (Pel-Pe3) allouée dynamiquement et inclus dans un paquet de transport (ET) encapsulé dans un paquet de réseau transmis dans le réseau de paquets (RP),
un moyen de commande (LTR) pour remplacer l'identificateur (ITe) du terminal (Te) inclus en tant qu'adresse de source (@IPS) dans un premier paquet de réseau (PQ1) transmis depuis le terminal à travers l'installation (IC) par un identificateur prédéterminé (IPI) de l'installation ayant ledit format et inclus dans un deuxième paquet de réseau (PQ2) qui est transmis dans le réseau de paquets (RP) vers un moyen de fournisseur de services de téléphonie (SP), et pour remplacer un numéro de port (PORT1-PORTJ) désignant une étape de communication de voix (E2-EJ) avec le terminal (Te) et inclus dans un paquet de transport (ET) encapsulé dans le premier paquet de réseau (PQ1) par un numéro de port (Pe1-PeJ) alloué dynamiquement au terminal (Te) et inclus dans un paquet de transport (ET) encapsulé dans le deuxième paquet de réseau (PQ2) afin d'identifier à la fois ledit terminal et l'étape de communication avec le terminal dans le moyen de fournisseur (SP), et
un moyen de commande (LTR) pour remplacer l'identificateur (IPI) de l'installation (IC) inclus en tant qu'adresse de destination (@IPD) dans un troisième paquet de réseau (PQ3) qui est transmis dans le réseau de paquets (RP) depuis le moyen de fournisseur (SP) vers l'installation (IC) à travers le réseau de paquets (RP) et le numéro de port (Pe1-PeJ) inclus dans un paquet de transport encapsulé dans le troisième paquet de réseau (PQ3) respectivement par l'identificateur (ITe) du terminal inclus dans un quatrième paquet de réseau (PQ4) transmis vers le terminal (Te) à travers l'installation (IC) et le numéro de port (PORT1-PORTJ) désignant l'étape de communication de voix (E2-EJ) et inclus dans un paquet de transport encapsulé dans le quatrième paquet de réseau (PQ4).

6. Dispositif conforme à.la revendication 5, dans lequel les moyens de commande (LTR) effacent les numéros de port (Pe2-PeJ) alloués dynamiquement dans la table de correspondance (TC) à la fin de la communication avec le terminal (Te).

## Patentansprüche

1. Verfahren zur Übersetzung der Kennungen von Endgeräten (T1 - TE) in einer Fernmelde-Teilnehmeranlage (IC), wobei die genannten Kennungen ein festgelegtes Format haben und in Netzpaketen (ER) enthalten sind, die ein Paketnetz (RP) durchqueren, **dadurch gekennzeichnet, dass**
die Kennung (ITe) eines Endgerätes (Te), die als Quellenadresse (@IPS) in einem ersten Netzpaket (PQ1) enthalten ist, das vom Endgerät durch die Anlage (IC) gesandt wird, in eine vorher festgelegte Kennung (IPI) der Anlage übersetzt wird (E0 - E4), die das genannte Format hat und in einem zweiten Netzpaket (PQ2) enthalten ist, das im Paketnetz (RP) zu einem Telephondienstanbietermittel (SP) übertragen wird, und
eine Anschlussnummer (PORT1 - PORTJ), die eine Etappe einer Fernsprechverbindung (E2 - EJ) mit dem Endgerät (Te) bezeichnet und in einem Transportpaket (ET) enthalten ist, das im ersten Netzpaket (PQ1) verkapselt ist, in eine Anschlussnummer (Pe1 - PeJ) übersetzt wird, die dem Endgerät (Te) dynamisch zugewiesen wird und in einem Transportpaket (ET) enthalten ist, das im zweiten Netzpaket (PQ2) verkapselt wird, um gleichzeitig das genannte Endgerät und die Etappe der Verbindung mit dem Endgerät im Anbietermittel (SP) zu kennzeichnen,
und umgekehrt die Kennung (IPI) der Anlage (IC), die als Bestimmungsadresse (@IPD) in einem dritten Netzpaket (PQ3) enthalten ist, das im Paketnetz (RP) vom Anbietermittel (SP) zur Anlage (IC) übertragen wird, und die Anschlussnummer (Pe1 - PeJ), die in einem Transportpaket enthalten ist, das im dritten Netzpaket (PQ3) verkapselt ist, in die Kennung lTe des Endgerätes, die in einem vierten Netzpaket (PQ4) enthalten ist, das durch die Anlage (IC) zum Endgerät (Te) übertragen wird, bzw. in die Anschlussnummer (PORT1 - PORTJ), die die Etappe der Fernsprechverbindung (E2 - EJ) bezeichnet und in einem Transportpaket enthalten ist, das im vierten Netzpaket (PQ4) verkapselt wird, übersetzt werden.

2. Verfahren nach Patentanspruch 1, in dem die Anschlussnummer im zweiten Netzpaket (PQ2) beim Anschließen des Endgerätes (ITe) an die Anlage (IC) eine vorher festgelegte, vom Endgerät unabhängige Quellenanschlussnummer (P0) ist und das Anbietermittel (SP) dem Endgerät (Te) eine entsprechende Anschlussnummer (Pe1) zuweist und sie als Bestimmungsnummer im Transportpaket, das im dritten Netzpaket (PQ3) enthalten ist, in die Anlage (IC) überträgt.

3. Verfahren nach Patentanspruch 1 oder 2, in dem die dynamisch zugewiesene Anschlussnummer (Pe2 - PeJ) am Ende der Verbindung mit dem Endgerät (ITe) erneut zur Verfügung steht.

4. Verfahren nach irgendeinem der Patentansprüche 1 bis 3, in dem die Kennung (ITe) des Endgerätes (Te) und die Anschlussnummer (PORT1 - PORTJ), die eine Etappe einer Fernsprechverbindung (E2 - EJ) bezeichnet, ebenfalls in ein Datenfeld (D) des ersten Netzpaketes (PQ1) eingefügt werden und in die Kennung (IPI) der Anlage bzw. in die dem Endgerät (Te) dynamisch zugewiesene Anschlussnummer (Pe1 - PeJ) übersetzt werden, die ebenfalls in ein Datenfeld (D) des zweiten Netzpaketes (PQ2) eingefügt werden, und umgekehrt die Kennung (IPI) der Anlage und die dem Endgerät (Te) dynamisch zugewiesene Anschlussnummer (Pe1 - PeJ) ebenfalls in ein Datenfeld (D) des dritten Netzpaketes (PQ3) eingefügt werden und in die Kennung (ITe) des Endgerätes (Te) bzw. die Anschlussnummer (PORT1 - PORTJ), die eine Etappe einer Fernsprechverbindung (E2 - EJ) bezeichnet, übersetzt werden, die ebenfalls in ein Datenfeld (D) des vierten Netzpaketes (PQ4) eingefügt werden.

5. Vorrichtung zur Übersetzung der Kennungen von Endgeräten (T1 - TE) in einer Fernmelde-Teilnehmerantage (IC), wobei die genannten Kennungen ein festgelegtes Format haben und in Netzpaketen (ER) enthaltenn sind, die ein Paketübertragungsnetz (RP) durchqueren, **dadurch gekennzeichnet, dass** sie umfasst:
eine Korrespondenztabelle (TC), um die Kennung (ITe) eines Endgerätes (Te), die in einem Netzpaket (ER) enthalten ist, das in der Anlage (IC) übertragen wird, mit einer Anschlussnummer (Pe1 - Pe3) in Beziehung zu setzen, die dynamisch zugewiesen wird und in ein Transportpaket (ET) eingefügt wird, das in einem Netzpaket verkapselt wird, das im Paketnetz (RP) übertragen wird,
ein Steuermittel (LTR) zum Ersetzen der Kennung (ITe) des Endgerätes (Te), die als Quellenadresse (@IPS) in einem ersten Netzpaket (PQ1) enthalten ist, das vom Endgerät durch die Anlage (IC) gesendet wird, durch eine vorher festgelegte Kennung (IPI) der Anlage, die das genannte Format hat und in einem zweiten Netzpaket (PQ2) enthalten ist, das im Paketnetz (RP) zu einem Fernmeldedienstanbietermittel (SP) übertragen wird, und zum Ersetzen einer Anschlussnummer (PORT1 - PORTJ), die eine Etappe einer Fernsprechverbindung (E2 - EJ) mit dem Endgerät (Te) bezeichnet und in einem Transportpaket (ET) enthalten ist, das im ersten Netzpaket (PQ1) verkapselt ist, durch eine Anschlussnummer (Pe1 - PeJ), die dem Endgerät (Te) dynamisch zugewiesen wird und in einem Transportpaket (ET) enthalten ist, das im zweiten Netzpaket (PQ2) verkapselt wird, um gleichzeitig das genannte Endgerät und die Etappe der Fernsprechverbindung mit dem Endgerät im Anbietermittel (SP) zu kennzeichnen, und
ein Steuermittel (LTR) zum Ersetzen der Kennung (IPI) der Anlage (IC), die als Quellenadresse (@IPD) in einem dritten Netzpaket (PQ3) enthalten ist, das im Paketnetz (RP) vom Anbietermittel (SP) zur Anlage (IC) übermittelt wird, und der Anschlussnummer (Pe1 - PeJ), die in einem Transportpaket enthalten ist, das im dritten Netzpaket (PQ3) verkapselt ist, durch die Kennung (ITe) des Endgerätes, die in einem vierten Netzpaket (PQ4) enthalten ist, das durch die Anlage (IC) zum Endgerät (Te) übertragen wird, bzw. durch die Anschlussnummer (PORT1 - PORTJ), die die Etappe der Fernsprechverbindung (E2 - EJ) bezeichnet und in einem Transportpaket enthalten ist, das im vierten Netzpaket (PQ4) verkapselt ist.

6. Vorrichtung nach Patentanspruch 5, in der die Steuermittel (LTR) die dynamisch zugewiesenen Anschlussnummern (Pe2 - PeJ) am Ende der Verbindung mit dem Endgerät (Te) in der Korrespondenztabelle (TC) löschen.

## Claims

1. A method of translating identifiers of terminals (T1-TE) in a client telecommunication installation (IC), said identifiers having a predetermined format and being included in network packets (ER) in transit through a packet transmission network (RP), **characterized in that**
the identifier (ITe) of a terminal (Te) included as a source address (@IPS) in a first network packet (PQ1) transmitted from the terminal through the client installation (IC) is translated (E0-E4) into a predetermined identifier (IPI) of the installation (IC) having said format and included in a second network packet (PQ2) which is transmitted in the packet network (RP) to telephone service provider means (SP), and
a port number (PORT1-PORTJ) designating a voice call step (E2-EJ) involving the terminal (Te) and included in a transport packet (ET) encapsulated in the first network packet (PQ1) is translated into a port number (Pe1-PeJ) allocated dynamically to the terminal (Te) and included in a transport packet (ET) encapsulated in the second network packet (PQ2) in order to identify both said terminal and the call step involving the terminal in the provider means (SP),
and conversely, the identifier (IPI) of the installation (IC) included as a destination address (@IPD) in a third network packet (PQ3) which is transmitted in the packet network (RP) from the provider means (SP) to the installation (IC) through the packet network (RP) and the port number (Pe1-PeJ) included in a transport packet encapsulated in the third network packet (PQ3) are translated respectively into the identifier (ITe) of the terminal included in a fourth network packet (PQ4) transmitted to the terminal (Te) through the installation (IC) and the port number (PORT1-PORTJ) designating the voice call step (E2-EJ) and included in a transport packet encapsulated in the fourth network packet (PQ4).

2. A method according to claim 1, wherein, at the time of connecting the terminal (ITe) to the installation (IC), the port number in the second network packet (PQ2) is a predetermined source port number (P0) independent of the terminal, and the service provider means (SP) allocates a respective port number (Pe1) to the terminal (Te) and transmits it as a destination port number in the transport packet included in the third network packet (PQ3) to the installation (IC).

3. A method according to claim 1 or 2, wherein the port number (Pe2-PeJ) allocated dynamically is again available at the end of the call involving the terminal (ITe).

4. A method according to any one of claims 1 to 3, wherein the identifier (ITe) of the terminal (Te) and the port number (PORT1-PORTJ) designating a voice call step ((E2-EJ) are also included in a data field (D) of the first network packet (PQ1) and are translated respectively into the identifier (IPI) of the installation and the port number (Pe1-PeJ) allocated dynamically to the terminal (Te) which are also included in a data field (D) of the second network packet (PQ2), and conversely, the identifier (IPI) of the installation and the port number (Pe1-PeJ) allocated dynamically to the terminal (Te) are also included in a data field (D) of the third network packet (PQ3) and are translated respectively into the identifier (ITe) of the terminal (Te) and the port number (PORT1-PORTJ) designating a voice call step (E2-EJ) which are also included in a data field (D) of the fourth network packet (PQ4).

5. A device for translating identifiers of terminals (T1-TE) in a client telecommunication installation (IC), said identifiers having a predetermined format and being included in network packets (ER) in transit through a packet transmission network (RP), **characterized in that** it comprises
a mapping table (TC) for matching the identifier (ITe) of a terminal (Te) included in a network packet (ER) transmitted in the installation (IC) to a port number (Pel-Pe3) allocated dynamically and included in a transport packet (ET) encapsulated in a network packet transmitted in the packet network (RP),
control means (LTR) for replacing the identifier (ITe) of the terminal (Te) included as a source address (@IPS) in a first network packet (PQ1) transmitted by the terminal through the installation (IC) by a predetermined identifier (IPI) of the installation having said format and included in a second network packet (PQ2) which is transmitted in the packet network (RP) to telephone service provider means (SP) and for replacing a port number (PORT1-PORTJ) designating a voice call step (E2-EJ) involving the terminal (Te) and included in a transport packet (ET) encapsulated in the first network packet (PQ1) by a port number (Pe1-PeJ) allocated dynamically to the terminal (Te) and included in a transport packet encapsulated in the second network packet (PQ2), in order to identify both said terminal and the call step involving the terminal in the provider means (SP), and
control means (LFR) for replacing the identifier (IPI) of the installation (IC) included as a destination address (@IPD) in a third network packet (PQ3) which is transmitted in the packet network (RP) from the provider means (SP) to the installation (IC) through the packet network (RP) and the port number (Pe1-PeJ) included in a transport packet encapsulated in the third network packet (PQ3) respectively by the identifier (ITe) of the terminal included in a fourth network packet (PQ4) transmitted to the terminal (Te) through the installation (IC) and the port number (PORT1-PORTJ) designating the voice call step (E2-EJ) and included in a transport packet encapsulated in the fourth network packet (PQ4).

6. A device according to claim 5, wherein the control means (LTR) delete the port numbers (Pe2-PeJ) allocated dynamically in the mapping table (TC) at the end of the call involving the terminal (Te).
